(19) Europäisches Patentamt
European Patent Office
Office européen des brevets

(11) **EP 2 386 377 B1**

(12) **EUROPEAN PATENT SPECIFICATION**

(45) Date of publication and mention
of the grant of the patent:
**31.05.2017 Bulletin 2017/22**

(51) Int Cl.:
*C02F 1/70* $^{(2006.01)}$  *C02F 103/16* $^{(2006.01)}$
*C25D 21/16* $^{(2006.01)}$  *B23H 3/10* $^{(2006.01)}$

(21) Application number: **10380069.4**

(22) Date of filing: **12.05.2010**

(54) **Method of getting reusable electrolyte from electrochemical machining of parts made up of nickel, iron and chromium.**

Verfahren zur Gewinnung eines wiederverwendbaren Elektrolyts aus der elektromechanischen Bearbeitung von Teilen aus Nickel, Eisen und Chrom

Procédé pour l'obtention d'électrolytes réutilisables à partir de l'usinage électrochimique de pièces faites de nickel, fer et chrome

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**16.11.2011 Bulletin 2011/46**

(73) Proprietor: **Industria de Turbo Propulsores S.A. 48170 Zamudio (Vizcaya) (ES)**

(72) Inventors:
• **Rodriguez Burgos, Valentin 48215 Durango (Vizcaya) (ES)**
• **Gutiérrez Lopez, Alberto 48100 Mungia, Bizkaia (ES)**

(74) Representative: **Carvajal y Urquijo, Isabel et al Clarke, Modet & Co. Suero de Quiñones, 34-36 28002 Madrid (ES)**

(56) References cited:
**DE-A1- 2 622 928  US-A- 5 000 859 US-A- 5 783 061**

Description

## TECHNICAL FIELD

The present invention relates to a method to get reusable electrolyte in Electrochemical Machining (ECM hereinafter) and mainly in ECM of parts made up of nickel, iron and chromium, whose anodic dissolution take place in an aqueous electrolyte of $NaNO_3$ or $NaCl$, and to an installation for getting reusable electrolyte in electrochemical machining. Such a method and installation are known from DE2622928A1 which discloses the features of the preambles of claims 1 and 7.

## BACKGROUND

The accumulation of Cr(VI), as chromate ion $CrO_4^{2-}$ for pH $\geq 7$, coming from the elemental chromium of the machined parts, determines the lifetime of the electrolyte (Rumyantsev, E.; Davidov, A.; "Electrochemical machining of metals", MIR, Moscow, 1989). Increasing concentration of chromate involves high health risks, diminishes anodic dissolution efficiency, and makes the management of hydroxide sludge quite expensive because this solid waste cannot be sold to produce nickel alloy by pyrometallurgy, even though up to 10% of its weight is elemental nickel, if additional washing cycles and reducing processes to Cr(III) are not included.

Nitrites formed as the nitrate ion decomposes in the ECM cathode pose another potential health risk. Nevertheless, a minimal concentration of chromate inhibits said decomposition because chromate ion plates an extremely thin layer of chromium hydroxide onto the cathode (Duarte, H.A.; Jha, K.; Weidner, J.W.; "Electrochemical reduction of nitrates and nitrites in alkaline media in the presence of hexavalent chromium", Journal of Applied Electrochemistry, vol. 28, pp. 811-817, 1998) which, in turn, slows down decomposition to favour hydrogen gas discharge instead, and prevents pitting corrosion in nearby unmachined areas of the part. As a result, it is convenient altogether to keep a low residual concentration of chromate.

Users would periodically purge the bulk of electrolyte and replenish it with new nitrate brine in order for the chromate concentration to remain under certain limit given by their own experience. This addition also enables to regain the solution that had been lost during filtration of the sludge produced by the machining, along with minor losses due to said decomposition of the nitrate ion.

Although there are many well-known substances capable of reducing Cr(VI) to Cr(III), standardized methods for other industrial processes have resulted almost useless in ECM, because when tested they have caused noticeable fall of the surface integrity of the parts, the economic profitability of the process, or even have failed in meeting occupational health standards. As a matter of fact nowadays there is not a single reliable method of continual reduction of the hexavalent chromium compatible with ECM, only a number of batch processes riddled with problems.

For instance, sulphur bearing substances like $NaHSO_3$, $Na_2S_2O_5$, or $Fe_2S$ are very common in chrome plating or leather tanning industry to reduce chromate in waste solutions, but this is not feasible in ECM solutions since in all of them sulphur is eventually oxidized to $SO_4^{2-}$, inhibiting so the process of anodic dissolution which ECM of nickel-chromium-iron alloys is founded on. The same can be said about the use of ferrous salts, whose only stable as well as cheap source is $FeSO_4 \cdot 7H_2O$. Even when these attempts have succeeded in putting ferrous ion without involving sulphates, as in JP 52136849, the volume of the ferric hydroxide sludge produced along with the chromium hydroxide dilutes the nickel content to make it unmarketable, and turns the problem of the management of liquid effluents into another of solid waste. US 5,380,441 tries to iron out this drawback by using small particles of iron and nitric acid to deliver Fe(0) from iron surface instead of Fe(II), and eventually would reduce the same concentration of chromate ions with one third of the iron we would need if it were present as ferrous ions, but nitric acid acts as a passivating agent of the iron surface, what it means that after a very short period of time iron develops a thick layer of oxides that slows down reduction velocity nearly to zero.

To overcome these problems some patents such as US 5,415,848, US 5,427,692, or US 5,000,859 resort to later addition of toxic barium salts that entirely precipitates sulphate ion as barium sulphate. Unfortunately barium nitrate is quite expensive and once again the total volume of sludge to be managed as hazardous waste increases, along with its cost, from 3 to 5 times.

Scientific literature provides some research papers on powerful reducers, above all the most simple amines like hydrazine (Saltanovskaya, L.V.; Dikusar, A.I; "Influence of products of electrochemical machining of heat-resistant chromium-nickel alloys in nitrate electrolytes on the reduction rate of chromium (VI)", Elektronnaya Obrabotka Materialov -in Russian-, vol. 4, pp. 46-49, 1990) or hydroxylamine, that do not introduce strange ions in aqueous solutions when they are oxidized by chromate, but give off gases instead. However, on an industrial scale unreacted traces of these substances are hardly removed and represent an occupational health risk as considerable as that of the hexavalent chromium.

Hydrogen peroxide can also be used as a reducer of chromate at low pH, it does not leave foreign ions in the solution either, it is fairly safer than amines, and easily oxidized up as it is shown in the family of patents US 5,783,061-EP 0832042. Unfortunately, hydrogen peroxide is much more hastily decomposed by dissolved iron than oxidized by chromate, and it demands high volume of acid to accelerate the reduction. Patent US 5,783,061 tries to iron these drawbacks out by upgrading ECM facilities not only with microfiltration equipment in order to previous removal of the iron in the solution to a trace level, but also with electrodialysis stacks that partly split sodium nitrate solution into nitric acid and sodium hydroxide by means of bipolar membranes. Theoretically this would provide all the acid necessary for the reduction to take place, and the hydroxide to return the solution back to the initial pH. Even though this scheme would eventually work, such an upgrade of a fairly simple physical-chemical ECM facility implies prohibitive expenses in capital investment, maintenance, energy, and spares, above all in bipolar membranes whose durability is quite short in a highly oxidative and sludge-laden environment. And finally, the fact that just by close monitoring of the physical and chemical conditions within a narrow field might be avoided some persistent peroxocomplexes which oxidise to Cr(VI) as solution returns back to alkaline pH, demonstrates the lack of resilience and adequacy of the method to a changing industrial environment. There is supposedly a way out to this drawback according to US 4,321,149; if the solution is highly concentrated in any organic reducer more noble than Cr(II) at low pH, it is assured that the products of the oxidation of hydrogen peroxide would not oxidize chromium again to Cr(VI). This scheme is conceived to get rid of streams of waste, but it fails when applied to ECM electrolytes. Such a high concentrations of unreacted organics interferes anodic dissolution rendering impossible to operate properly an ECM machine.

Speaking of organic reducers, text books on advanced organic chemistry (Hudlicky, M.; "Oxidations in Organic Chemistry", Monograph ACS 1896, American Chemical Society, Washington, 1990.) qualify $K_2CrO_4$ as a suitable oxidative agent in acid solution for many organic substances such as alcohols, aldehydes, carboxylic acids or glycols. Some of them would not supposedly leave a trace or product in the solution because having just one or two atoms of carbon should be fully oxidised to carbon dioxide: methanol, formaldehyde, oxalic acid, or formic acid for instance; they are not used in ECM though, because the velocity of the reaction is extremely slow in comparison with those of inorganic reducers. Either high concentration of mineral acid - acid catalysis- (Benson, D.; "Mechanisms of oxidation by metal ions", Elsevier Scientific Publishing, Oxford, 1976)), or the addition of noble metals -heterogeneous catalysis-(Omole, M.A.; K'Owino, I.O.; Sadik, O.A.; "Palladium nanoparticles for catalytic reduction of Cr(VI) using formic acid", Applied Catalysis B: Environmental, vol. 76, pp. 158-167, 2007) at very high temperature is required to come even close to these. In the former case, the ECM facility would need so much nitric acid that the maximum physical volume of the facility would be exceeded shortly on adding more sodium hydroxide to regain working pH and more water to keep the concentration of nitrates within operational limits; then one would purge the solution once again. In the latter case, the costs are simply higher than the management of the waste solution that we intended to save.

Hence, it is evident that there is a necessity to define a new procedure that enables to remove chromate in ECM solutions without the set of drawbacks already explained. In the following sections it is detailed how this aim is accomplished by means of the method proposed in this invention.

## DESCRIPTION

The method of the invention deals with the use of an organic solution whose solvent is a water-insoluble blend of benzyl alcohol and an extractant selected from aromatic, poly-amyl-phosphate or poly-alkyl-phosphate compounds, preferably tri-n-butyl phosphate (TBP hereinafter), and whose solute is a mixture of oxalic acid, as an activator, and a strong acid selected from nitric acid or hydrochloric acid, in concentrations not higher than $5 \times 10^{-3}$ M and $10^{-4}$ M respectively, together with a queous electrolyte purges from the ECM facility of parts made up of nickel, iron and chromium, to form a heterogeneous mixture of phases where reduction of chromate proceeds, as opposed to methods so far applied in ECM that adds chemicals to reduce chromate in the aqueous solution itself. This composition is tailored to perform critical functions other than the reduction of chromate, whose effectiveness would be useless on its own, and shows properties that the components do not fully develop on a separate basis, and above all, when they are directly dissolved in the ECM electrolyte as it has been customary.

This method permits to develop an installation and a procedure to keep steady concentrations of chromate ion below 500 ppm, without any of the problems that plague other known processes, as it is detailed below.

The reduction is obtained in a first step by pouring ECM electrolyte purges in big volumes of said organic solution, and mixing them in a biphasic fluid, so that all the chromate ions are surrounded by a vast majority of benzyl alcohol molecules, yet it is not incorporated in the aqueous electrolyte, since benzyl alcohol is nearly insoluble in water.

Benzyl alcohol and oxalic acid are well known reducers of chromate ions in acid solutions. Being their velocity constants of the top order among the most simple organic substances, they cannot compete with inorganic mechanisms of reduction unless they find the most extreme conditions of 'acid catalysis' while added to build huge concentrations that would not be used up, so they would eventually interfere the mechanism of anodic dissolution of ECM process.

Even in these favourable conditions, state-of-the-art assumes that an acceleration of two orders of magnitude would only be possible if one still added prohibitive amounts of strong acid concentrate. Present invention replace partially so much waste in strong acids by smaller amounts of oxalic acid to work as an 'activator', what it seems to be contradictory to the common knowledge in chemistry as the pH will be higher, but surprisingly the velocity dramatically increases to such an extent that the reduction is over in a couple of minutes even at moderate pH ≥2.

Apparently, the reason why oxalic is such a critical component of the blend is this. Oxidations with chromate of benzyl alcohol and oxalic acid instead of proceeding mainly through the ways they usually do when separated, whose velocity is determined by the probability of formation of an intermediate complex between bichromate ion ($HCrO_4^-$) and benzyl alcohol or oxalic acid respectively, do proceed through a new mixed way by which the intermediate complex is a ring composed of one molecule of the three active components: benzyl alcohol, oxalic acid and bichromate. During the synergetic oxidation, benzyl alcohol keeps donating two electrons while oxalic acid acts as an activator that gives just one electron off. To sum up, owing to 'synergetic oxidation' there is a new term of velocity $k_3[H_2C_2O_4][C_7H_8O]$ in addition to those separately assigned to each reducer:

$$-d(Ln[CrO_4^{2-}])/dt = k_1 [H_2C_2O_4] + k_2 [C_7H_8O] + k_3[H_2C_2O_4][C_7H_8O]$$

Hence $k_1$ and $k_2$ are the constants that, given certain conditions of temperature, pH and ionic strength, account for separate oxidations whereas $k_3$ does the same when they oxidize simultaneously. In general first order terms in concentration are negligible, and in the present case this is even more accurate as $[C_7H_8O]$ is gigantic. This term is also present if benzyl alcohol is substituted by other alcohols, but the use of oxalic as activator is needed for this application. The synergetic oxidation is not restricted to a situation where benzyl alcohol or other non-aqueous solvents are used but it also happens in aqueous solutions, however an acid catalysis would be still necessary since $k_1$, $k_2$ and $k_3$ are quite pH dependent. On the contrary, velocity constants in organic solutions seem to diminish more slowly with a rising pH, so that is why this invention works even at a pH ≥2.

In the following examples it is shown that the synergetic oxidation in aqueous solution must still backed up by high acidity, whereas in the non-aqueous one milder acidity can be advantageously used.

## EXAMPLE 1

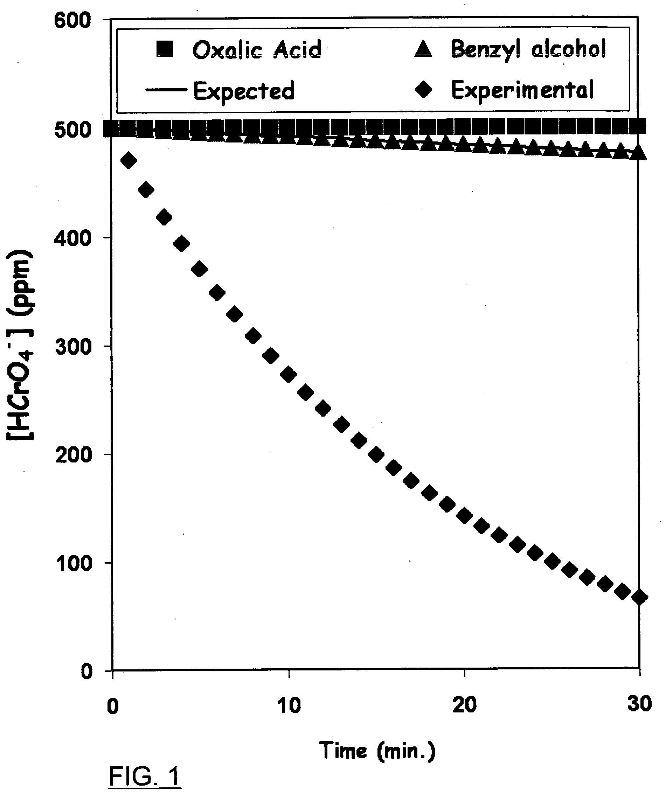

Three 25 ml aqueous solutions have been prepared with a uniform background of 2.5 M sodium nitrate, 0.32 M nitric acid and potassium dichromate to a final chromate concentration of 500 ppm. In one of them 0.0025 g of oxalic acid dihydrate ($7.94 \times 10^{-4}$M) has been added, in the second 0.1 g of benzyl alcohol ($3.7 \times 10^{-2}$M) has been poured, and in the third one both reducers in the same amounts. Then, figure 1 shows time evolution of the $[HCrO_4^-]$ measured by spectrophotometry for all the samples, along with a reference curve worked out by addition of the data obtained with the two samples with a single reducer.

## EXAMPLE 2

Two 25 ml aqueous sample have been prepared with a uniform background of 2.5 M sodium nitrate and potassium dichromate to a final chromate concentration of 1 g/l.

In one of them 0.1 g of benzyl alcohol (over saturation point), and 0.038 g of oxalic acid dihydrate has been poured along with 5 ml of 65% nitric acid to build up a concentration of 4.45M. It took 3'21" to get the spectrophotometrically measured concentration of chromate below 20 ppm.

The second one was poured in a separatory funnel filled with 130.5 g of benzyl alcohol, 0.67 ml of 65% nitric acid and 0.038 g of oxalic acid. After 1'30" of shaking and 20" at rest before decanting, a chromate concentration of 12 ppm was spectrophotometrically measured for a total time of 2 minutes from the beginning.

Even though a volume of nitric acid 7.5 times smaller was used the process in the organic media is clearly much faster, because the great concentration of benzyl alcohol in the organic phase does not imply at all that benzyl alcohol concentration in the aqueous phase could be higher than in the first sample, as this was oversaturated with benzyl alcohol.

Although a good deal of the oxalic acid is kept by the organic phase when ECM electrolyte in it has been reduced, and the phases are left at rest to separate, the oxalic acid still dissolved in the aqueous phase would deplete the organic phase below the necessary concentration of the activator in a couple of cycles. Benzyl alcohol and its oxidation products: benzaldehyde and benzoic acid, are less easily dissolved because of higher distribution coefficients octanol/water than that of oxalic acid, but for the alcohol is a main solvent, the aqueous phase would be saturated over 2 g/l. Apart from economical reasons, the only way to beat the lower costs of inorganic reducers is to minimize losses, an excess of oxalate ion and benzyl alcohol impact on the efficiency of the ECM, henceforth it is included a water insoluble, inert to the redox system, nontoxic liquid-liquid extractant as a co-solvent of the non-aqueous phase. The best option tailored for oxalic acid, benzyl alcohol and its oxidation products turned out to be the volumetric substitution of 30% to 50% of the benzyl alcohol by TBP, what allows the growth of the distribution coefficients of oxalic acid, and benzyl alcohol from 1.5 and 3 respectively to experimental values exceeding 5; for percentages over 50% reduction times are exponentially lengthened, while below 30% distribution coefficients between phases are not clearly enhanced.

## EXAMPLE 3

A separatory funnel was filled with different 100 ml solutions of benzyl alcohol and increasing percentage of TBP. In all the cases, 0.091 g of 65% nitric acid and 0.067 g of oxalic acid were dissolved in the organic phase before pouring 20 ml aliquots of a 200 g/l sodium nitrate aqueous solution loaded with 1 g/l of chromate ion. All the runs were processed in the same way: 2 minutes of reduction while shaking, and 20 minutes at rest before decanting the aqueous phase, and making an analysis of oxalic acid in both phases to determine its coefficient of distribution, $k_D$ = log ([oxalic acid]$_{ORGANIC}$/[oxalic acid]$_{AQUEOUS}$).

Despite the fact that the presence of the strong acid is no longer a must for the reduction of chromates, and it is originally included to restrain from excessive spending in oxalic acid, on limiting its role to act as an 'activator' more than as an acid, the addition of the small quantity that compensates the loss of nitrate ion in the main facility is another factor, along with procedure of work to be review later, to obtain an efficiency in the ratio of oxidized benzyl alcohol and oxalic acid to used-up organics over 97% and 85% respectively. For the oxalic acid, the efficiency depends mainly on its concentration: the higher it is, the more quantity of tetracquo(oxalate)-chromate(III), diacquo-bis(oxalate)-chromate(III) and tris(oxalate)-chromate(III) are formed during reduction. These complexes are virtually insoluble in the organic phase, hence as the loss of oxalic acid cannot be avoided it is advisable to have a concentration of 'activator' in the lower range ($< 2 \times 10^{-3}$M) and replenish it more frequently.

Even though benzyl alcohol and TBP can be regarded as the best balance of sought after properties as they have been just enunciated, the alcohol could be replaced by others like octanol, nonanol, undecanol, dodecanol or cycloheptanol, whereas TBP could be replaced by benzene, tri-n-amyl-phosphate, tri-iso-amyl-phosphate, tri-sec-butyl-phosphate, or tri-n-hexyl- phosphate. On the contrary, a minimum concentration of $9 \times 10^{-4}$ M of oxalic acid can hardly be substituted by any other equivalent activator in the organic phase in order to implement the aim of the present invention.

In the second step of the method of the invention, the aqueous electrolyte dragging oxalato-chromate (III) complexes of the first reactor, is mixed in a second reactor with a solution of a strong base selected from alkaline hydroxides, alkaline-earth oxides, alkaline-earth hydroxides, alkaline carbonates and alkaline-earth carbonates or mixtures thereof, preferably hydroxide sodium concentrate, until oxalato-chromate (III) complexes are transformed to chromium hydroxide and insoluble oxalates.

The electrolyte should not be decanted to the second reactor to be added said solution of the strong base but on the contrary, the second reactor must contain the solution of the strong base before the arrival of the electrolyte, while the impellers stir the mix in such a way that the electrolyte alkalinity is much higher than the final one (pH $\geq$12) most of the time.

Such a large time gradient of pH is fundamental to induce a similarly sudden transformation of the oxalato-chromate (III) complexes in chromium hydroxide and oxalates. If oxalato-chromate (III) complexes were not removed to trace level, metal chromium might be deposited on the cathode surface during subsequent ECM process what produces a change of the geometry to be copied onto the machined pieces. If the progression up to pH 12 were steady, the weight of sodium hydroxide required to get at the same final pH would be larger and complexes would stabilize in solution, resulting in such a longer time (hours) and/or temperature to get rid of them that would not be compatible with the procedure as explained later.

At the same time, such a high alkalinity at the beginning is a new stage in the removal of organics, from the level of mg/l to that of traces, by unleashing a 'Cannizzaro reaction' that stoichiometrically disproportionates benzaldehyde molecules by reaction among themselves to give benzyl alcohol and benzoic acid. Since the solution is again oversaturated with both, benzyl alcohol forms a new phase that will be removed and stored to be used as explained later, and sodium benzoate precipitates to be co-filtered with the chromium hydroxide and the ECM sludge on returning to the main ECM facility. As the pH $\geq$12 most of the chromium hydroxide is dissolved at this stage as Cr(OH)$_4^-$, so blockage caused by big volumes of precipitate is not an issue at this stage.

It is important for the economy of the process to emphasize that these reactions mandatory as they are, do not require more spent in sodium hydroxide than that necessary to keep the pH of the electrolyte within a steady working range, so they do not represent an extra cost. It must be taken into account that ECM of nickel-iron-chromium alloys produces a lot of metallic ions in solution that hydrolises water, and causes the pH to drop rapidly if sodium hydroxide is not periodically dosed. What the invention makes is to manage the same quantity of alkali in a different way, using it firstly at higher concentrations in small volume purges to perform aforementioned reactions, and mixing finally this high pH treated electrolyte with the main stream to balance a nearly constant pH from cycle to cycle.

However sodium hydroxide is the preferred alkali throughout this invention, it can be alternatively substituted by other oxides, hydroxides, or carbonates of sodium, potassium, magnesium or calcium with similar results.

The method takes place in an inexpensive ancillary installation, easy to implement on any ECM facility. Although said installation is supported by a number of systems, basically consists of two consecutive batch reactors:

- A first reactor having liquid-liquid discontinuous extraction functionality, contains the reducing organic solution into which a purge from the main ECM facility comes so as to carry out the reduction of chromate, the extraction of the products of benzyl alcohol oxidation towards organic phase, the extraction of oxalato-chromate (III) complexes towards the aqueous phase, and the final settling of the organic and aqueous phases.

- A second reactor which receives the reduced electrolyte to increase pH to ≥12 by adding it to a concentrated sodium hydroxide solution. This reactor takes responsibility mainly for breaking oxalato-chromate(III) complexes apart and completing the removal of dissolved organics in the ECM electrolyte to trace level, because the actual precipitation and removal of chromium hydroxide takes place in the main ECM facility when treated electrolyte returns.

In the first reactor, purges of electrolyte from the main ECM facility keep contact, without actual dissolution of phases, with at least 5 times its own volume of organic media at a temperature equal or higher than that of the ECM process, by means of mechanical agitation for a few minutes. After a rest period, the aqueous phase settles down to the bottom dragging oxalato-chromate (III) complexes inherent to chromate reduction in presence of oxalic acid, whereas most of the benzaldehyde and benzoic acid produced by the oxidation of benzyl alcohol remain in the upper organic phase; oxidation of oxalic acid merely generates carbon dioxide that are given off the reactor.

Electrolyte is eventually drained to the second reactor where an agitated sodium hydroxide concentration is waiting for it to raise the pH to ≥ 12. As a result Cr(III) complexes split into chromium hydroxide and oxalates, benzaldehyde disproportionates, benzyl alcohol forms a thin layer on top of the treated electrolyte and a little share of gelatinous solids (mainly sodium benzoate and sodium oxalate) gets down to the bottom; therefore the electrolyte, except for the tails of benzyl alcohol on top, can be pumped back to the main ECM facility at the same pace than the purges, and ready to use. Tails should be preferably stocked until the time in which the benzaldehyde accumulated in the organic phase of the former reactor is removed by a similar process, as outlined below. As a result of these actions, the concentrations of the nitrate and chromate ions in the ECM facility are continuously kept within a narrow range without detrimental concentrations of organics, and free from operational downtime in the ECM process. As a secondary effect of the range of pH within which chromate reduction is performed, most of the nitrite ions in the ECM solution are reoxidized to nitrate due to the precise taking of electrons by the chromate, hence additional treatments are no longer necessary to maintain nitrite concentration below 100 ppm either.

In order for the organic phase in the first reactor to keep adequate performance, apart from refilling the small fraction of benzyl alcohol and oxalic acid oxidized after several cycles of work, it should be treated with a concentrated solution of strong base as sodium hydroxide, e.g. during programmed maintenance stop of the main ECM facility, to disproportionate benzaldehyde back again to benzyl alcohol and precipitate sodium benzoate, in such a way that the organic solution recovers its initial composition when neutralized again with nitric acid. A good part of the required hydroxide can be obtained from the tails stored during the operation of the second reactor, mixed with all the benzyl alcohol accumulated cycle after cycle.

The procedure of the present invention put these aspects together to solve many of the drawbacks associated to other known methods:

- it cuts comparative costs of operation.

  • When compared with methods based on inorganic sulphur bearing reducers, even though proposed solution is clearly more expensive at first, final cost of the consumed reactants is similar or lower because efficiency exceeds 90%. On the contrary, inorganic reducers produce tons of iron-enriched useless sludge whose management is quite loss-making whereas proposed method generates a much lower weight of sludge valuable for nickel reclaiming processes.

  • When compared with the method of hydrogen peroxide, microfiltration and electrodialysis, in addition to similar reasoning about the reducer, proposed facility is much simpler, it does not require expensive hardware neither spares (e.g. bipolar membranes) and pumping energy fare is much lower (high-pressure pump are not required), then investment and maintenance costs are accordingly greatly diminished.

- It permits to implement a quasi-continuous execution, which keeps chromate concentration in a narrow range below 500 ppm to homogenise working conditions of the ECM solutions.

- It does not detrimentally interfere with the ECM process, since final products are merely present at trace levels; oxidation products either initially vanish as carbon dioxide, or eventually do it during ECM process by unnoticeable oxidation on the part. Chromate reduction products are transformed into hydroxides by fast alkalinisation.

- It minimizes volume of sludge because, apart from chromium hydroxide inherent to the reduction of Cr(VI), only small amounts of organics are added, which in turn are thermally decomposed in rotary furnaces during sludge reduction to metal fines without developing toxic fumes.
- It makes unnecessary waste management produced by increasing of the volume of the solution, as it is no longer necessary to use massive additions of strong acids to approach the reduction velocity of inorganic reducers. Improvement is based in the 'activation effect' of the oxalic acid during the 'synergetic oxidation' with benzyl alcohol and in the insolubility of the reducing solution as it has been already explained.
- It promotes a simplified joint treatment of the ECM electrolyte, since additional operations or treatments on the electrolyte, such as dissolution of solid sodium nitrate or chloride, regulation of pH at the ECM machine inlet, or removal of nitrites are no longer required to recover full operational condition. With the implementation of the proposed ancillary installation, the main ECM facility can be downgraded to a couple of tanks with conventional equipment for filtration of solids and temperature control.

Operational procedure of the ancillary installation

A volume of electrolyte is periodically taken from the main ECM facility while it normally runs, and sent to the first reactor of the ancillary installation by any pumping or decanting system. Refilling of the main ECM facility with treated electrolyte from the second reactor is immediately carried out on the same regular basis. This electrolyte had finished the previous cycle with a maximum content of chromate below 10 ppm.

Since the total volume of electrolyte in the main facility fluctuates between two steps, purged volume is a compromise between an upper limit over which normal work of the main ECM facility would be at risk, and a lower limit under which thorough removal of chromate in the purge would result in higher chromate levels than expected for the solution in the main facility. Typically, if the ECM machines fed by a facility are running full blast it should not be treated less than 10% of the total volume of the installation every 20 minutes to keep chromate concentration under 500 ppm.

In order for the ancillary installation to run all the time, it should include some kind of storing tanks external to the reactors to provide them with any of the following substances when it is required by controlling devices, preferably on an automatic basis: benzyl alcohol/TBP solvent, concentrated nitric or hydrochloric acid, oxalic acid/benzyl alcohol slurry, and concentrated sodium hydroxide.

The first reactor can be anyone selected from a wide range of possible designs, e. g. mixer-settler, cyclone, or centrifuge, to perform stagewise liquid-liquid extractions as long as they have forceful agitation capabilities, e.g. impellers, and are properly dimensioned in order to mix and contain a dispersion of insoluble phases made up of the selected volume of the purged ECM electrolyte, and a volume of the reducing solution at least 5 times higher. In addition, it must be designed to settle and evacuate solids, in such a way that the heaviest phase as well as some expected solid sludge can be evacuated as it is described later.

Before the coming of the electrolyte a check on the level between preset limits should be enough to know when it is necessary to add benzyl alcohol/TBP solvent from its storing tank. As the benzyl alcohol is not only subject to dragging losses but also to oxidation, the experience will establish the degree of benzyl alcohol enrichment that the stored solvent should have to keep a steady benzyl alcohol/TBP ratio.

Strong acid additions from its storing tank to the organic phase does not need control devices, it can be calculated to balance the loss of nitrate or chloride ion in the sludge filters of the main ECM facility, according to a minimal injection per cycle. Once this has been set, adequate oxalic acid concentration can be simply accomplished by keeping pH of the heterogeneous mixing (when the electrolyte has been poured) preferably between 2.0 and 2.5, regardless of how much strong acid is added. The concentration of oxalic acid can be sensitively controlled by readings of the pH of the heterogeneous mixture to such an extent than any inexpensive proportional control device that turns on and off between both pH ends should be enough to adjust the required levels of oxalic acid on a continual basis.

Once the reduction stage has finished, agitation should be stopped and the reactor remain inactive for the short time required to complete the separation of phases that leaves the ECM electrolyte at the bottom of the reactor. During the stand of the solution in the reactor, the second one should have received a concentrate of sodium hydroxide so that after having decanted the aqueous phase to the reactor the eventual pH of the solution raises to ≥12. The actual weight of added sodium hydroxide is tuned so that the pH of the main ECM facility electrolyte remains stable at a preset value within the operating range 8-11 for the actual percentage of volume that is periodically purged.

The second reactor where alkalinisation takes place is a general purpose reactor with agitation capabilities and equipped with a system to retain 'process tails' of certain volume. This means that the outlet should be sufficiently thin and long to retain about 0.1 % of the total volume of treated electrolyte when a switch of minimum level at the upper end of this outlet becomes uncovered, what shuts the automatic valve down at the bottom of the outlet. The reactor must be backed by an auxiliary deposit where these tails are dumped and stored for later processing. Once the electrolyte has been poured onto the strong base, only a few minutes of agitation are necessary to complete all the reactions, and send the electrolyte along with some insoluble waste of benzoates and oxalates back to the main ECM facility, except for said tails.

Residual tails are mainly composed of the benzyl alcohol and other organics dissolved on it, and if they were immediately pumped back to the first reactor a good deal of the acidity necessary to work would end up unnecessarily and anti-economically wasted instead, so tails are gathered until they can be advantageously used when it is required to remove benzaldehyde, by a similar reaction, accumulated cycle after cycle in the organic phase of the first reactor. Transformations at high pH are quite less time-consuming that the whole sequence of tasks in the first reactor, henceforth second reactor can stay idle until reusable electrolyte can be brought back to the main facility, and then be recharged with the concentrate of strong base without downtimes at the outlet of the first reactor.

Maintenance step of the ancillary installation

As the cycles of reduction in the first reactor happen, the organic phase slowly gains concentration in benzoic acid, but above all in benzaldehyde. So as to avoid loss of reducing power in the long term the ancillary installation is devised to periodically make a short maintenance stop, preferably to match maintenance stops of the main ECM facility.

Benzaldehyde should be disproportionated in the reactor while this only contains the organic phase, by means of a concentrate of sodium hydroxide whose weight in alkali is equal to that of the benzaldehyde to be removed. This is high time to empty the auxiliary deposit of tails into the first reactor, to get rid of the high pH remains of benzyl alcohol and other organics accumulated, in such a way that the amount of additional strong base consumed is much smaller. Insoluble sodium benzoate can be easily removed by pumping the content of the reactor to the filtering means included in the main facility just by diverting the outlet of said filters to make it return again to the reactor. Finally, it is only necessary to add enough strong acid to get pH at 4 and oxalic acid down to pH 2 to leave the reactor prepared to resume its usual work.

## BRIEF DESCRIPTION OF THE DRAWINGS

The description of the different components of the system provided above is complemented with a series of drawings aimed at facilitating understanding of its structure and operation.

Figure 1 is an actual demonstration of synergetic reduction of chromate by representing the actual time evolution and that expected from single contributions.

Figure 2 is a sketch of an installation for the method of the invention

In said figures the following references are indicated:

1.- Electrochemical Machining (ECM) facility
2.- First valve
3.- First reactor
4.- Impeller of the first reactor
5.- Control devices of pH of the first reactor
6.- Level gage of the first reactor
7.- Pump of $C_7H_8O$ + TBP solvent
8.- Recirculation pump
9.- Tank of stored $C_7H_8O$ + TBP solvent
10.- Hopper of the slurry stored
11.- Tank of sodium hydroxide solution
12.- Second valve
13.- Second reactor
14.- Impeller of the second reactor
15.- Control devices of pH of the second reactor
16.- Pump of the stored sodium hydroxide solution
17.- Pump of the second reactor
18.- Third Valve
19.- Fourth valve
20.- Gage of minimum level
21.- Pump of the first reactor.
22.- Filtering means
23.- Tank of nitric acid
24.- Dosing pump
25.- Fifth valve

26.- Sixth valve
27.- Seventh valve
28.- Auxiliary deposit

## DETAILED DESCRIPTION OF THE INVENTION

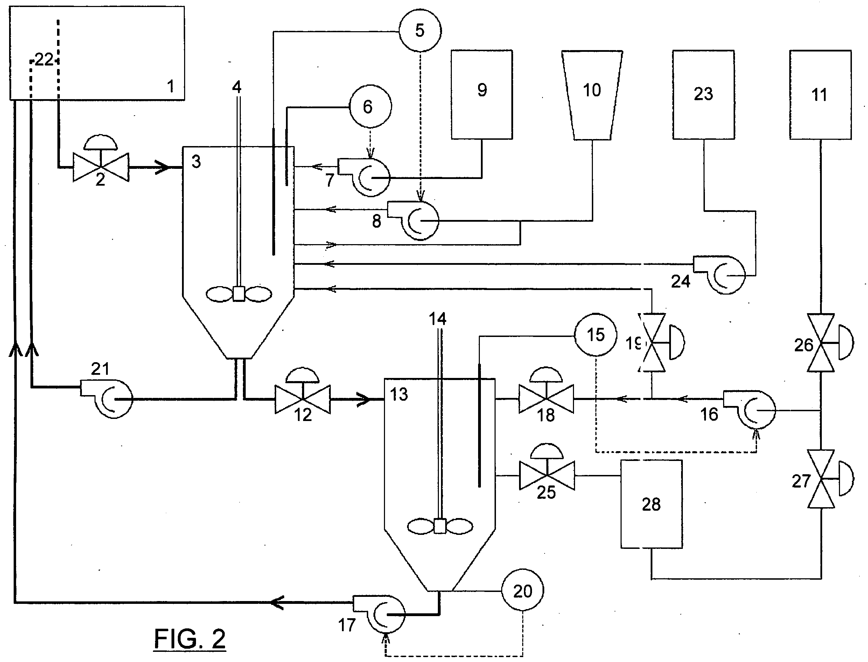

In a preferred method of the invention, a first step of reducing the chromate content of the ECM electrolyte is mixed with an organic solution that takes place in a first reactor (3), as shown in figure 2, whose solvent is a 7:3 to 1:1 volumetric blend of benzyl alcohol and TBP, where nitric acid and oxalic acid are dissolved to a range of concentrations, from $1.3 \times 10^{-5}$ to $10^{-4}$ M, and from $9 \times 10^{-4}$ to $5 \times 10^{-3}$ M respectively. This solution is forced to mix heterogeneously with the ECM electrolyte in a minimum ratio of 5 volumes of organic phase to 1 volume of aqueous phase.

The second step of alkaline conditioning of the electrolyte after reduction takes place in a second reactor (13).

In figure 2 it is shown an installation for the method of the invention consisting of a first valve (2) which introduces ECM electrolyte coming from ECM, circulation, in a first reactor (3) connected to a second reactor (13) by a second valve (12), which is connected to an auxiliary deposit (28) by a third valve (25), at different heights to allow the gravity to transfer the flow from the upper to the lower one by timed opening and closing the first (2), second (12) and third (25) valves.

In the mode of usual work, the controller of the cycle should establish a sequence of steps, with both reactors synchronized, according to the following steps (normalized for a cycle of 20 minutes):

| ELAPSED TIME (min) | ACTION AT THE FIRST REACTOR (3) | ACTION AT THE SECOND REACTOR (13) |
|---|---|---|
| 1' | Adjust level | Agitation (simultaneous reactions*) |
| 2' | Input of electrolyte from ECM | Agitation (simultaneous reactions*) |
| 3' | Electrolyte input from ECM | Agitation (simultaneous reactions*) |
| 4' | Electrolyte input from ECM | Separation of phases |
| 5' | Electrolyte input from ECM | Separation of phases |
| 6' | Electrolyte input from ECM | Hold on |
| 7' | Agitation (pH setting) | Hold on |
| 8' | Agitation (chromate reduction) | Hold on |
| 9' | Agitation (chromate reduction) | Output of electrolyte to ECM |
| 10' | Separation of phases | Output of electrolyte to ECM |
| 11' | Separation of phases | Output of electrolyte to ECM |
| 12' | Separation of phases | Output of electrolyte to ECM |
| 13' | Separation of phases | Output of electrolyte to ECM |
| 14' | Separation of phases | Drainage of tails |
| 15' | Separation of phases | Input of NaOH |
| 16' | Output of electrolyte to the second reactor (13) | Agitation and input from the first reactor (3) |
| 17' | Output of electrolyte to the second reactor (13) | Agitation and input from the first reactor (3) |
| 18' | Output of electrolyte to the second reactor (13) | Agitation and input from the first reactor (3) |
| 19' | Output of electrolyte to the second reactor (13) | Agitation and input from the first reactor (3) |
| 20' | Output of electrolyte to the second reactor (13) | Agitation and input from the first reactor (3) |
| *These simultaneous reactions imply vanishing of oxalato-chromate(III) complexes and aldehydes | | |

- Firstly a level gage (6) in the first reactor (3) checks the minimum level in order to adjust it, if necessary, by means of a pump (7) piped to a tank (9) storing the $C_7H_8O$ + TBP solvent that holds a volumetric ratio of benzyl alcohol to TBP much higher than that of the first reactor (3), say 100:1, for the loss of the redox active substance is much higher than the loss of the extractant.

- Then a first Valve (2) is open for the time needed to transfer the volume of ECM electrolyte to be treated toward the first reactor (3), while the second valve (12) remains shut.
- Then, an agitation is started in the first reactor (3) by an impeller (4). It remains running while the mixing of phases is forced along with the reduction of chromate. During this step, the pH control device (5) is enabled to turn on the recirculation pump (8) of the mixture if pH>2.5 and turn it off when pH<2. The recirculation pump (8) drives a 'venturi' suction flow of the slurry stored in the hopper (10) that is composed of oxalic acid oversaturated in benzyl alcohol. In this stage a fixed minimal volume of 65% nitric acid from tank (23) is sent with a dosing pump (24).
- After that, the agitation of the impeller (4) is stopped to let the phases get separated. In the meantime it is not allowed any addition through the inlets or valves (7, 8, 19 or 24), while the first valve (2) and second valve (12) remain shut. The bottom of the first reactor (3) must have a settling area scaled to the expected volume of ECM electrolyte that goes down there.
- Roughly a minute before the opening of the second valve (12), it is checked that the third valve (18) is open, as opposed to the forth valve (19), to switch on and off the pumping (16) of the stored 50% sodium hydroxide solution situated in a tank (11). Activation time is shorter than one minute.
- Once sodium hydroxide has been dosed, second valve (12) is open for the same time than that used for the first valve (2), while the rest of the valves and inlets to the first reactor (3) remain shut, to pour the reduced electrolyte down to the second reactor (13) where the concentrate of sodium hydroxide is already waiting under forceful agitation with an impeller (14). A pH control device (15) acts on the pumping (16) to adjust if pH < 12 due to possible excess of the initial amount of chromate that generates a higher concentration of oxalato-chromate(III) complexes which, in turn, require more sodium hydroxide to get transformed into chromium hydroxide.
- On shutting down all the inlet valves, the agitation of the impeller (14) of the second reactor turns off for an 'idle time' to keep both reactors synchronized during which the remains of benzyl alcohol, that can appear as a result of the disproportionation of the benzaldehyde, are accumulated like a thin film on top of the electrolyte.
- Once 'idle time' is over, the pump of the second reactor (17) is turned on to send the content of the reactor (13) back to the main ECM facility (1) until the gage of minimum level (20) stops the action.

The flow of electrolyte pumped to ECM circuit (1) does not require any additional treatment to get into the main facility because:

- Temperature is typically higher than that of ECM circuit (1) as a result of the sequence of exothermic reactions, what is perfectly suited to the control of temperature in ECM circuit (1) that adjust it at the inlet of the ECM machine by means of controlled cooling of the flow.
- The solid waste dumped with the galvanic sludge in ECM circuit (1) is by far smaller than that produced by reduction with inorganic chemicals, what prevents the nickel from devalorization by excessive dilution, while the oxalates and benzoates incorporated are not a drawback for the marketability of the product as both of them are thermally decomposed without release of toxics.
- The pH of the electrolyte can be eventually adjusted to any value over 12 on an experimental basis, to accurately balance the decrease that the electrolyte undergoes during ECM in ECM circuit (1).

- As the flow is automatically stopped by the gage of minimum level (20), tails retained at the outlet of the reactor can be fully drained towards the auxiliary deposit (28) on opening third valve (25) to store so all the alkalinised benzyl alcohol.

With regard to the implementation of the maintenance mode in the preferred embodiment, limited to remove excessive concentration of benzaldehyde in the organic phase, it is convenient to match the maintenance stop of both main and ancillary facilities because it is demanded a different setting of the main ECM facility. It is necessary to open first valve (2) that is shut at the end of a cycle in the reactor (3), but instead of flowing down electrolyte from ECM circuit (1) the outlet of the filtering means (22) in ECM facility (1) should have been preset in such a way that the flow reaching at the filters from first reactor (3) through a pump (21) returns to reactor through first valve (2). In order to match the configuration of the ancillary installation is only necessary to change the state of selecting third valve (18) and fourth valve (19), by opening fourth valve (19) and closing third valve (18); while control devices of pH (5) and level (6) in the first reactor (3) are disabled.

When set-up has been changed pumping (16) is turned on, firstly keeping seventh valve (27) open and sixth valve (26) shut to dump auxiliary deposit (28) in the first rector (3), and secondly shutting (27) down and opening (26) for the time needed to transfer a volume of 50% sodium hydroxide solution from the tank of sodium hydroxide solution (11) to the first reactor (3) and agitation with the impeller (4) is turned on. Accurate calculations of required base will depend on the actual volume and alkalinity content of the tails, as well as the amount of benzaldehyde accumulated and the frequency of the general maintenance stop. For instance, 1,200 litres of 50% sodium hydroxide concentrate correspond to the quarterly chromate accumulation in a 40,000 amps rated ECM facility that works 120 hours a week with 25% of downtime.

After 1 hour, the process should have been capable of quantitatively disproportionate a concentration of aldehyde as high as 1.5 M into alcohol and carboxylic acid, therefore agitation (4) is turned off and pumping (21) is turned on to make the whole content of the first reactor (3) go through the filter means (22) in ECM facility (1). Sodium benzoate and residual sodium oxalate is retained as insoluble solids in the filtering means while the main stream of benzyl alcohol returns entirely to the first reactor (3), firstly by pumping and finally applying an overpressure of dry air in the filtering pipeline or by equivalent methods known to all the experts in the art.

So as to prevent the second valve (12) in the first reactor (3) from blockage during the usual working mode, the outlet to the suction pipeline of the pump (21) should be different from that of the second valve (12), furthermore this should be conveniently covered or protected from incoming sludge during the maintenance stop by the methods known to all experts in the art.

Once filtering is over, while pump of the first reactor (21) remains off dosing pump (24) should be turned on for the time needed to dose as much 65% nitric acid to the first reactor (3) from nitric acid tank (23) as required to reach pH 4; and finally the pH control device (6) should be re-enabled to act on pump of the stored solvent (7) in order to finely tune to a value close to about 2 by adding of oxalic acid slurry (9) to leave the facility fully operative to get back to usual working mode.

The pH for the second reactor keep a constant pH in the ECM circuit (1) between 8 and 11, according to the actual volume of the purges taken from the ECM circuit (1) and the time between purges.

For a given concentration of nitric acid dosed, a pH based active control of the additions of oxalic acid assures that the concentration of oxalic acid is within said limits when the pH is kept inside a range 2 through 2.5.

The ECM solution to be processed can be made up of sodium chloride, instead of sodium nitrate, and the mineral acid to compensate for the loss of chloride ions can be hydrochloric acid, instead of nitric acid.

A pilot ancillary installation has been built in order to test the method of this invention as well as the other alternatives that keep a constant ECM efficiency (anodic dissolution is not sensitively disturbed), and can be used in any simple ECM facility. Others that do not meet these requirements are not even considered.

MET No.1: Reduction with ferrous sulphate. Removal of sulphates with barium nitrate.
MET No. 2: Reduction with hydrogen peroxide at low pH.
MET No. 3: Reduction in a biphasic fluid according to the present invention.

For this comparison continual running is not necessary. It takes 5 purges of 1000 litres from an ECM facility holding 50,000 litres of 200 g/l sodium nitrate electrolyte loaded with 1g/l of chromate ion, to treat them up one by one with the same method, and then pump them back to the ECM facility all together. Finally a conventional test of anodic efficiency of the ECM has been made to check electrolyte suitability.

The following table sums up the results that support asserts made in the 'summary of the invention'.

| METHOD | No. 1 | No. 2 | No. 3 |
|---|---|---|---|
| Actual pH | 8 | 1 | 2.5 |
| Spent reactants | 205 kg $FeSO_4$ | 236 kg $H_2O_2$ (30%) | 60 kg $H_2C_2O_4$ |
| | 195 kg $Ba(NO_3)_3$ | 485 kg $HNO_3$ (65%) | 47 kg $C_7H_8O$ |
| Efficiency of reactants | 59% | 31% | 92% |
| Time to $[CrO_4^{2-}] \leq 10$ ppm | 1' < | N/A (min. 122 ppm) | 1'41" |
| Cost of reactive | 293 .52 | 73.91 | 56.17 |
| Volume of sludge | 656 litres | 25 litres | 26 litres |
| Ni content in sludge | < 1% wt. | 8% wt. | 8% wt. |
| Cost of sludge management | 80.99 | -1.04 | -1.02 |
| Volume increase to constant $[NO_3^-]$ | 230 litres | 1576 litres | 0 litres |
| Cost of volume increase | 11.36 | 77.83 | 0 |
| Total Cost | 385.87 | 150.7 | 55.17 |
| ECM efficiency (electrolyte) | 88.3% | 88.2% | 88.2% |

**EP 2 386 377 B1**

Costs do not correspond to an actual currency. There have been normalized to the minimum absolute value calculated out of real market prices, and percentage of nickel corresponds to the average supposed to be obtained, when the 'nickel-free sludge' resulting from the reduction to Cr(III) is added to the 'nickel-bearing sludge' that it is obtained after machining a reference nickel-iron-chromium alloy to the extent necessary to get 1g/l of chromate in solution.

**Claims**

1. A method of getting reusable electrolyte from Electrochemical Machining of parts made up of nickel, iron and chromium, **characterized by** comprising:

- a first step of reducing the chromate content of the Electrochemical Machining electrolyte in a first reactor (3), by:

- agitating a biphasic heterogeneous mixture of:

- aqueous electrolyte purges from the Electrochemical Machining facility (1) of parts made up of nickel, iron and chromium, together with
- an organic solution, whose solvent is a water-insoluble blend of benzyl alcohol and an extractant selected from aromatic, poly-amyl-phosphate or poly-alkyl-phosphate compounds, and whose solute is a mixture of oxalic acid, as an activator, and a strong acid selected from nitric acid or hydrochloric acid, in concentrations not higher than $5x10^{-3}$ M and $10^{-4}$ M respectively,

- putting at rest the biphasic heterogeneous mixture obtained so that the aqueous electrolyte settles down to the bottom of the first reactor (3), dragging oxalato-chromate(III) complexes inherent to chromate reduction in presence of oxalic acid, whereas most of the benzaldehyde and benzoic acid produced by the oxidation of benzyl alcohol remain in the upper organic phase,

- a second step of alkalinisation, in which the aqueous electrolyte dragging oxalato-chromate (III) complexes of the first reactor (3), is mixed in a second reactor (13) with a solution of a strong base from the group selected from alkaline hydroxides, alkaline-earth oxides, alkaline-earth hydroxides, alkaline carbonates and alkaline-earth carbonates or mixtures thereof, until oxalato-chromate (III) complexes are transformed to chromium hydroxide and insoluble oxalates, getting reusable electrolyte with steady concentrations of chromate ion below 500 ppm

2. The method of claim 1 wherein the aqueous electrolyte purged from an Electrochemical Machining facility (1) is made up of sodium chloride and the strong acid of the organic solution of the biphasic heterogeneous mixture, is hydrochloric acid.

3. The method of claim 1 wherein the aqueous electrolyte purged from an Electrochemical Machining facility (1) is made up of sodium nitrate and the strong acid of the organic blend of the biphasic heterogeneous mixture, is nitric acid.

4. The method according to claims 2 and 3 wherein the solvent of the organic blend comprises a volumetric ratio alcohol-extractant between 70:30 and 50:50.

5. The method according to previous claims wherein the strong base is sodium hydroxide.

6. The method according to previous claims wherein alkalinised benzyl alcohol film on top of the second reactor (13) obtained from dissolved benzaldehyde produced by the oxidation of benzyl alcohol in the first reactor (3), is systematically kept in an auxiliary deposit (28) and used during a maintenance stop to remove excessive concentration of benzaldehyde in the organic phase of the first reactor (3).

7. Ancillary installation for getting reusable electrolyte in Electrochemical Machining facility (1) of parts made up of nickel, iron and chromium according to the procedure of claim 1 **characterized by** comprising:

- A first reactor (3) containing an organic solution whose solvent is a water-insoluble blend of benzyl alcohol and an extractant selected from aromatic, poly-amyl-phosphate or poly-alkyl-phosphate compounds, and whose solute is a mixture of oxalic acid, as an activator, and a strong acid selected from nitric acid or hydrochloric acid, in concentrations not higher than $5x10^{-3}$ M and $10^{-4}$ M respectively, connected to the Electrochemical Machining

12

facility (1) via a first valve (2) and which comprises an impeller (4), a control device of pH(5) and a level gage (6),
- A second reactor (13) connected to the first reactor (3), which comprises a control device of pH (15) and a solution of a strong base from the group selected from alkaline hydroxides, alkaline-earth oxides, alkaline-earth hydroxides, alkaline carbonates and alkaline-earth carbonates or mixtures thereof
- Recirculation pumps (21, 17) located between each reactor (3, 13) and the main Electrochemical Machining facility (1).

8. Ancillary installation according to claim 7 wherein it comprises an auxiliary deposit (28) of benzyl alcohol connected to the second reactor (13) via a valve (25) and connected to the first reactor (3) via a at least one pump (16) and a plurality of valves (27, 19)

**Patentansprüche**

1. Verfahren zur Gewinnung eines wiederverwendbaren Elektrolyts aus der elektromechanischen Bearbeitung von Teilen aus Nickel, Eisen und Chrom, **dadurch gekennzeichnet, dass** es Folgendes umfasst:

- einen ersten Schritt des Verringerns des Chromatgehalts des Elektrolyts aus der elektromechanischen Bearbeitung in einem ersten Reaktor (3), durch:

- das Rühren einer zweiphasigen heterogenen Mischung aus:

- wässrigen Elektrolytspülungen aus der Anlage zur elektromechanischen Bearbeitung (1) von Teilen aus Nickel, Eisen und Chrom, zusammen mit
- einer organischen Lösung, deren Lösungsmittel ein wasserunlösliches Gemisch aus Benzylalkohol und einem Extraktionsmittel ausgewählt aus aromatischen Polyamylphosphat- oder Polyalkylphosphat-Verbindungen ist, und deren aufgelöster Stoff eine Mischung aus Oxalsäure, als Aktivator, und einer starken Säure ausgewählt aus Salpetersäure oder Salzsäure, in Konzentrationen, welche jeweils nicht höher als $5x10^{-3}$ M und $10^{-4}$ M sind, ist,

- das Inruhestellen der erhaltenen zweiphasigen heterogenen Mischung, so dass sich der wässrige Elektrolyt auf dem Boden des ersten Reaktors (3) abscheidet und Oxalat-Chromat (III)-Komplexe schleppt, welche inhärent zur Chromatreduktion in Gegenwart von Oxalsäure sind, während ein Großteil des/der durch die Oxidation von Benzylalkohol erzeugten Benzaldehyd und Benzoesäure in der oberen organischen Phase bleibt,

- einen zweiten Schritt der Alkalisierung, in welchem der wässrige Elektrolyt, welcher Oxalat-Chromat (III)-Komplexe des ersten Reaktors (3) schleppt, in einem zweiten Reaktor (13) mit einer Lösung aus einer starken Base aus der Gruppe ausgewählt aus alkalischen Hydroxiden, erdalkalischen Oxiden, erdalkalischen Hydroxiden, alkalischen Carbonaten und erdalkalischen Carbonaten oder Mischungen derselben gemischt wird, bis die Oxalat-Chromat (III)-Komplexe in Chromhydroxid und unlösliche Oxalate umgewandelt werden, unter Gewinnung eines wiederverwendbaren Elektrolyts mit gleichmäßigen Chromationenkonzentrationen unter 500 ppm.

2. Verfahren nach Anspruch 1, wobei der aus einer Anlage zur elektromechanischen Bearbeitung (1) gespülte wässrige Elektrolyt aus Natriumchlorid besteht und die starke Säure der organischen Lösung der zweiphasigen heterogenen Mischung, Salzsäure ist.

3. Verfahren nach Anspruch 1, wobei der aus einer Anlage zur elektromechanischen Bearbeitung (1) gespülte wässrige Elektrolyt aus Natriumnitrat besteht und die starke Säure des organischen Gemisches der zweiphasigen heterogenen Mischung, Salpetersäure ist.

4. Verfahren nach den Ansprüchen 2 und 3, wobei das Lösungsmittel des organischen Gemisches ein volumetrisches Verhältnis von Alkohol-Extraktionsmittel zwischen 70:30 und 50:50 umfasst.

5. Verfahren nach den vorhergehenden Ansprüchen, wobei die starke Base Natriumhydroxid ist.

6. Verfahren nach den vorhergehenden Ansprüchen, wobei ein alkalisierter Benzylalkoholfilm auf dem zweiten Reaktor (13), welcher aus gelöstem Benzaldehyd erhalten wird, welches durch die Oxidation von Benzylalkohol im ersten Reaktor (3) hergestellt wird, systematisch in einem Hilfslager (28) aufbewahrt wird und während eines Wartungsstopps verwendet wird, um die übermäßige Benzaldehydkonzentration in der organischen Phase des ersten Reaktors (3) zu beseitigen.

**7.** Nebeneinrichtung zur Gewinnung eines wiederverwendbaren Elektrolyts in einer Anlage zur elektromechanischen Bearbeitung (1) von Teilen aus Nickel, Eisen und Chrom gemäß dem Verfahren nach Anspruch 1, **dadurch gekennzeichnet, dass** sie Folgendes umfasst:

- einen ersten Reaktor (3) enthaltend eine organische Lösung, deren Lösungsmittel ein wasserunlösliches Gemisch aus Benzylalkohol und einem Extraktionsmittel ausgewählt aus aromatischen Polyamylphosphat- oder Polyalkylphosphat-Verbindungen ist, und deren aufgelöster Stoff eine Mischung aus Oxalsäure, als Aktivator, und einer starken Säure ausgewählt aus Salpetersäure oder Salzsäure, in Konzentrationen , welche jeweils nicht höher als $5 \times 10^{-3}$ M und $10^{-4}$ M sind, ist, welcher mit der Anlage zur elektromechanischen Bearbeitung (1) über ein erstes Ventil (2) verbunden ist und welcher ein Antriebsrad (4), eine pH-Steuervorrichtung (5) und ein Standmessgerät (6) umfasst,
- einen zweiten Reaktor (13), mit dem ersten Reaktor (3) verbunden, welcher eine pH-Steuervorrichtung (15) und eine Lösung aus einer starken Base aus der Gruppe ausgewählt aus alkalischen Hydroxiden, erdalkalischen Oxiden, erdalkalischen Hydroxiden, alkalischen Carbonaten und erdalkalischen Carbonaten oder Mischungen derselben umfasst,
- Umwälzpumpen (21, 17), welche sich zwischen jedem Reaktor (3, 13) und der Hauptanlage zur elektromechanischen Bearbeitung (1) befinden.

**8.** Nebeneinrichtung nach Anspruch 7, wobei sie ein Hilfslager (28) für Benzylalkohol umfasst, welches mit dem zweiten Reaktor (13) über ein Ventil (25) verbunden ist und mit dem ersten Reaktor (3) über mindestens eine Pumpe (16) und eine Vielzahl von Ventilen (27, 19) verbunden ist.

## Revendications

**1.** Procédé pour l'obtention d'électrolytes réutilisables à partir de l'usinage électrochimique de pièces faites en nickel, fer et chrome, **caractérisé en ce qu'**il comprend :

- une première étape de réduction du contenu de chromate de l'électrolyte d'usinage électrochimique dans un premier réacteur (3), par:

- agitation d'un mélange hétérogène biphasé de :

- purges d'électrolyte aqueux de l'installation d'usinage électrochimique (1) de pièces faites en nickel, fer et chrome, conjointement avec
- une solution organique, dont le solvant est un mélange insoluble dans l'eau d'alcool benzylique et un agent d'extraction choisi parmi des composés aromatiques, poly-amyl-phosphates ou poly-alkyl-phosphates, et dont le soluté est un mélange d'acide oxalique, comme activateur, et un acide fort choisi parmi l'acide nitrique ou l'acide chlorhydrique, dans des concentrations non supérieures à $5 \times 10^{-3}$ M et $10^{-4}$ M respectivement.

- mise au repos du mélange hétérogène biphasé obtenu de manière que l'électrolyte aqueux se stabilise au fond du premier réacteur (3), dragage de complexes d'oxalate-chromate (III) inhérents à la réduction de chromate en présence d'acide oxalique, tandis que la plupart du benzaldéhyde et de l'acide benzoïque produit par l'oxydation d'alcool benzylique demeure dans la phase organique supérieure.

- une deuxième étape d'alcalinisation, dans laquelle l'électrolyte aqueux qui drague les complexes d'oxalate-chromate (III) du premier réacteur (3), est mélangé dans un deuxième réacteur (13) avec une solution d'une base forte du groupe choisi parmi des hydroxydes alcalins, des oxydes alcalinoterreux, des hydroxydes alcalinoterreux, des carbonates alcalins et des carbonates alcalinoterreux ou des mélanges de ceux-ci, jusqu'à ce que les complexes oxalate-chromate (III) soient transformés en hydroxydes de chrome et des oxalates insolubles, en obtenant un électrolyte réutilisable avec des concentrations stables d'ion de chromate inférieures à 500 ppm.

**2.** Procédé selon la revendication 1 dans lequel l'électrolyte aqueux purgé par l'installation d'usinage électrochimique (1) est fait de chlorure de sodium et l'acide fort de la solution organique du mélange hétérogène biphasé est de l'acide chlorhydrique.

**3.** Procédé selon la revendication 1 dans lequel l'électrolyte aqueux purgé par l'installation d'usinage électrochimique (1) est fait de nitrate de sodium et l'acide fort du mélange organique du mélange hétérogène biphasé est de l'acide nitrique.

**4.** Procédé selon les revendications 2 et 3 dans lequel le solvant du mélange organique comprend une proportion volumétrique d'alcool-agent d'extraction allant de 70:30 à 50:50.

**5.** Procédé selon les revendications précédentes dans lequel la base forte est de l'hydroxyde de sodium.

**6.** Procédé selon les revendications précédentes dans lequel le film d'alcool benzylique alcalinisé sur la partie supérieure du deuxième réacteur (13) obtenu à partir de benzaldéhyde dissout produit par l'oxydation d'alcool benzylique dans le premier réacteur (3), est systématiquement maintenu dans un réservoir auxiliaire (28) et utilisé pendant un arrêt de maintenance pour éliminer la concentration excessive de benzaldéhyde dans la phase organique du premier réacteur (3).

**7.** Installation auxiliaire pour l'obtention d'électrolytes réutilisables dans une installation d'usinage électrochimique (1) de pièces faites en nickel, fer et chrome selon le procédé de la revendication 1, **caractérisé en ce qu'**il comprend :

- un premier réacteur (3) contenant une solution organique dont le solvant est un mélange insoluble dans l'eau d'alcool benzylique et un agent d'extraction choisi parmi des composés aromatiques, poly-amyl-phosphates ou poly-alkyl-phosphates, et dont le soluté est un mélange d'acide oxalique, comme activateur, et un acide fort choisi parmi l'acide nitrique ou l'acide chlorhydrique, dans des concentrations non supérieures à $5 \times 10^{-3}$ M et $10^{-4}$ M respectivement, relié à l'installation d'usinage électrochimique (1) par le biais d'une valve (2) et qui comprend une turbine (4), un dispositif de contrôle de pH (5) et une jauge de niveau (6),
- un deuxième réacteur (13) relié au premier réacteur (3), qui comprend un dispositif de contrôle de pH (15) et une solution d'une base forte du groupe choisi parmi des hydroxydes alcalins, des oxydes alcalinoterreux, des hydroxydes alcalinoterreux, des carbonates alcalins et des carbonates alcalinoterreux ou des mélanges de ceux-ci,
- des pompes de recirculations (21, 17) situées entre chaque réacteur (3, 13) et l'installation d'usinage électrochimique (1) principale.

**8.** Installation auxiliaire selon la revendication 7 dans laquelle elle comprend un réservoir auxiliaire (28) d'alcool benzylique relié au deuxième réacteur (13) par le biais d'une valve (25) et relié au premier réacteur (3) par le biais d'au moins une pompe (16) et une pluralité de valves (27, 19).

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 2622928 A1
- JP 52136849 B
- US 5380441 A
- US 5415848 A
- US 5427692 A
- US 5000859 A
- US 5783061 A
- EP 0832042 A
- US 4321149 A

### Non-patent literature cited in the description

- **RUMYANTSEV, E. ; DAVIDOV, A.** Electrochemical machining of metals. MIR, 1989
- **DUARTE, H.A. ; JHA, K. ; WEIDNER, J.W.** Electrochemical reduction of nitrates and nitrites in alkaline media in the presence of hexavalent chromium. *Journal of Applied Electrochemistry,* 1998, vol. 28, 811-817
- **SALTANOVSKAYA, L.V. ; DIKUSAR, A.I.** Influence of products of electrochemical machining of heat-resistant chromium-nickel alloys in nitrate electrolytes on the reduction rate of chromium (VI). *Elektronnaya Obrabotka Materialov,* 1990, vol. 4, 46-49
- Oxidations in Organic Chemistry. **HUDLICKY, M.** Monograph ACS. American Chemical Society, 1896
- **BENSON, D.** Mechanisms of oxidation by metal ions. Elsevier Scientific Publishing, 1976
- **OMOLE, M.A. ; K'OWINO, I.O. ; SADIK, O.A.** Palladium nanoparticles for catalytic reduction of Cr(VI) using formic acid. *Applied Catalysis B: Environmental,* 2007, vol. 76, 158-167